# EUROPEAN PATENT SPECIFICATION

(11) **EP 2 832 040 B1**
(45) Date of publication and mention of the grant of the patent: **04.10.2017**
(21) Application number: 13715562.8
(22) Date of filing: 27.03.2013
(51) Int. Cl.: H04L 12/24

(54) **SYSTEM AND METHOD FOR ROOT CAUSE ANALYSIS OF MOBILE NETWORK PERFORMANCE PROBLEMS**
SYSTEM UND VERFAHREN ZUR URSACHENANALYSE VON LEISTUNGSPROBLEMEN IN MOBILEN NETZWERKEN
SYSTÈME ET PROCÉDÉ D'ANALYSE DE CAUSE PROFONDE DE PROBLÈMES DE PERFORMANCE DE RÉSEAU MOBILE

(30) Priority: 30.03.2012 US 201213436212
(43) Date of publication of application: 04.02.2015
(73) Proprietor: Alcatel Lucent, 92100 Boulogne-Billancourt (FR)
(72) Inventor: CAO, Jin, Murray Hill, NJ 07974-0636 (US); LI, Li, Erran, Murray Hill, NJ 07974-0636 (US); BU, Tian, Murray Hill, NJ 07974-0636 (US); SANDERS, Susan, Wu, Murray Hill, NJ 07974-0636 (US)
(74) Representative: Wetzel, Emmanuelle
(86) International application number: PCT/US2013/034027
(87) International publication number: WO 2013/148785

(56) References cited:
- WO-A1-2008/107020
- US-A1- 2007 263 550
- ZHENGYU WANG ET AL: "A Novel Scheme for Internet Application Performance Analysis and Monitoring", EVOLVING INTERNET, 2009. INTERNET '09. FIRST INTERNATIONAL CONFERENCE ON, IEEE, PISCATAWAY, NJ, USA, 23 August 2009 (2009-08-23), pages 1-8, XP031540627, ISBN: 978-1-4244-4718-3
- MPS BHATIA ET AL: "A Proposal for the Management of Mobile Network's Quality of Service (QoS) using Data Mining Methods", WIRELESS AND OPTICAL COMMUNICATIONS NETWORKS, 2007. WOCN '07. IFI P INTERNATIONAL CONFERENCE ON, IEEE, PI, 1 July 2007 (2007-07-01), pages 1-5, XP031123468, ISBN: 978-1-4244-1004-0

## Description

### FIELD OF THE INVENTION

The invention relates generally to managing network resources such as in a wireless network and, more specifically but not exclusively, to analyzing attribute change impact within a managed network.

### BACKGROUND

The rapid penetration of smart phones has put tremendous stress on mobile networks resulting in users experiencing poor application performance. Mobile network operators need to understand the root causes of poor network performance so they can take remedial action.

Presently, network operators use one or more of key performance indicators (KPIs) and key quality indicators (KQIs), which may be constructed using event counter data associated with network equipment, protocols, subscribers, applications and the like. For example, Universal Mobile Telecommunications System (UMTS) contemplates the use of thousands of UMTS Terrestrial Radio Access Network (UTRAN) event counters. These counters aggregate radio network information such as handoff events, paging events, physical transmission powers and the like for a fixed time interval. However, the specific impact to performance metrics indicated by event counters is largely unknown.

Zhengyu Wang et al "A novel scheme for internet Application performance analysis and monitoring, 2009 -08-23" discloses a scheme for Internet application performance analysis and monitoring. The user perceived application response time (UPRT) is modelled by regression analysis.

International Patent Application WO 2008/107020 A1 discloses an arrangement for monitoring performance in a network comprising a number of network devices or nodes, services and users, in real-time.

MPS BHATIA et al. "A Proposal for the Management of Mobile Network's Quality of Service (QoS) using Data Mining Methods" discloses using data mining methods for managing quality of service in mobile networks.

US Patent Application US 2007/263550 A1 discloses a method and system for identifying relevant metrics among metrics that are measured to determine conformance with a service level agreement.

### BRIEF SUMMARY

Various deficiencies of the prior art are addressed by the present invention of a method and apparatus for correlating event counter data with cell level Transmission Control Protocol (TCP) performance data.

Various embodiments contemplate a method and apparatus for identifying causes of performance metric changes in a communication network by selecting, from a pool of network event counters, a plurality of candidate counters relevant to a performance metric; grouping candidate counters into clusters of similar counters; selecting, from each cluster, one or more representative counters; and fitting the selected representative counters to a model of the performance metric by processing the selected representative counters according to said model and determining a set of representative counters most relevant to the performance metric based on the fitted selected representative counters.

### BRIEF DESCRIPTION OF THE DRAWINGS

The teachings of the present invention can be readily understood by considering the following detailed description in conjunction with the accompanying drawings, in which:
FIG. 1 depicts an exemplary wireless communication system including a management system according to an embodiment;
FIG. 2 depicts an exemplary management system suitable for use as the management system of FIG. 1;
FIG. 3 depicts a flow diagram of a method according to one embodiment;
FIG. 4 depicts a flow diagram of a method according to one embodiment;
FIG.5A-5C graphically depict several diagrams useful in understanding the various embodiments; and
FIG. 6 depicts a high-level block diagram of a computer suitable for use in performing functions described herein.

To facilitate understanding, identical reference numerals have been used, where possible, to designate identical elements that are common to the figures.

### DETAILED DESCRIPTION OF THE INVENTION

Embodiments of the invention will be primarily described within the context of a network management system (NMS) adapted to manage event counter data associated with a Long Term Evolution (LTE) network such as event counter data associated with network elements, communications links, subnets, protocols, services, applications, layers and any other element, object or portion thereof within an LTE network. However, those skilled in the art and informed by the teachings herein will realize that the various embodiments are also applicable to other types of wireless networks (e.g., 2G networks, 3G networks, WiMAX, etc.), wireline networks or combinations of wireless and wireline networks. Thus, the network elements, links, connectors, sites and other objects representing mobile services may identify network elements associated with other types of wireless and wireline networks.

Various embodiments are adapted to identify one or more root causes of recurring user performance problems by correlating UTRAN event counters (EC) with performance metrics such as loss, delay and throughput monitored by a network monitor.

The approximately three thousand (3000) UTRAN event counters taken together provide detailed information on the operating conditions of the network, though not all counters will be associated with identifiable root causes. For example, some important metrics such as Nack.rate, Discard.rate, AirIntTput and the like may be strongly correlated to network performance, yet not directly associated with degraded performance root causes.

The following are possible categories of root causes: power budget, signaling overload, Code Division Multiple Access (CDMA) code availability, downlink/uplink Signal to Noise Ratio (SNR), backhaul congestion, handoff/cell selection, cell overload, and the like. It should be noted that the some counters are highly correlated, and so each category of root cause maybe reflected in many counters, though other counters are not well correlated and, therefore, are not as well reflected in various root cause categories.

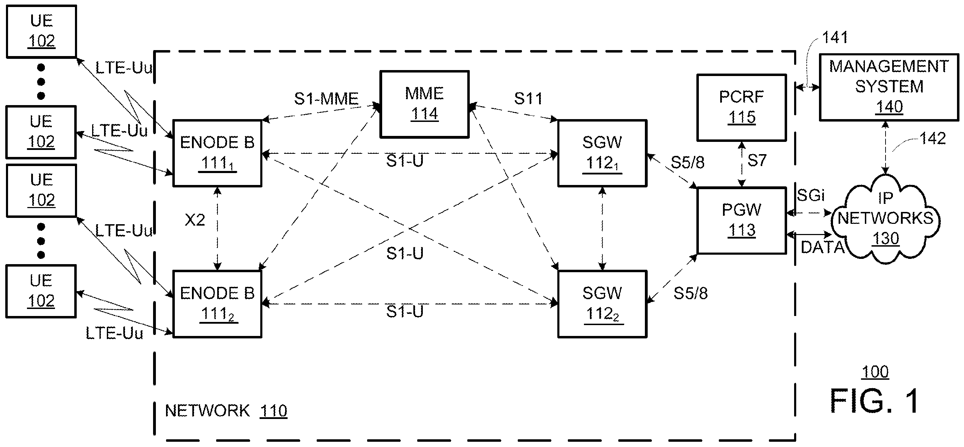

FIG. 1 depicts an exemplary wireless communication system including management and backup / protection functions according to an embodiment. Specifically, FIG. 1 depicts an exemplary wireless communication system 100 that includes a plurality of User Equipment (UEs) 102, a Long Term Evolution (LTE) network 110, IP networks 130, and a network management system (NMS) 140. The LTE network 110 supports communications between the UEs 102 and IP networks 130. The MS 140 is configured for supporting various management functions for LTE network 110. The configuration and operation of LTE networks will be understood by one skilled in the art.

The exemplary UEs 102 are wireless user devices capable of accessing a wireless network, such as LTE network 110. The UEs 102 are capable of supporting control signaling in support of the bearer session(s). The UEs 102 may be mobile phones, personal digital assistants (PDAs), computers, tablets devices or any other wireless user device.

The exemplary LTE network 110 includes, illustratively, two eNodeBs 111₁ and 111₂ (collectively, eNodeBs 111), two Serving Gateways (SGWs) 112₁ and 112₂ (collectively, SGWs 112), a Packet Data Network (PDN) Gateway (PGW) 113, a Mobility Management Entity (MME) 114, and a Policy and Charging Rules Function (PCRF) 115. The eNodeBs 111 provide a radio access interface for UEs 102. The SGWs 112, PGW 113, MME 114, and PCRF 115, as well as other components which have been omitted for purposes of clarity, cooperate to provide an Evolved Packet Core (EPC) network supporting end-to-end service delivery using Internet Protocol (IP).

The eNodeBs 111 support communications for UEs 102. As depicted in FIG. 1, each eNodeB 111 supports a respective plurality of UEs 102. The communication between the eNodeBs 111 and the UEs 102 is supported using interfaces, for example LTE-Uu interfaces, associated with each of the UEs 102.

The SGWs 112 support communications for eNodeBs 111 using, illustratively, respective S1-u interfaces between the SGWs 112 and the eNodeBs 111. The S1-u interfaces support per-bearer user plane tunneling and inter-eNodeB path switching during handover.

As depicted in FIG. 1, SGW 112₁ supports communications for eNodeB 111₁ and SGW 112₂ supports communications for eNodeB 111₂. In various protection/backup embodiments, SGW 112₁ is also capable of supporting communications for eNodeB 111₂ and SGW 112₂ is also capable of supporting communications for eNodeB 111₁.

The PGW 113 supports communications for the SGWs 112 using, illustratively, respective S5/S8 interfaces between PGW 113 and SGWs 112. The S5 interfaces provide functions such as user plane tunneling and tunnel management for communications between PGW 113 and SGWs 112, SGW relocation due to UE mobility, and the like. The S8 interfaces, which may be Public Land Mobile Network (PLMN) variants of the S5 interfaces, provide inter-PLMN interfaces providing user and control plane connectivity between the SGW in the Visitor PLMN (VPLMN) and the PGW in the Home PLMN (HPLMN). The PGW 113 facilitates communications between LTE network 110 and IP networks 130 via an SGi interface.

The MME 114 provides mobility management functions in support of mobility of UEs 102. The MME 114 supports the eNodeBs 111 using, illustratively, respective S1-MME interfaces which provide control plane protocols for communication between the MME 114 and the eNodeBs 111.

The PCRF 115 provides dynamic management capabilities by which the service provider may manage rules related to services provided via LTE network 110 and rules related to charging for services provided via LTE network 110.

As depicted and described herein with respect to FIG. 1, elements of LTE network 110 communicate via interfaces between the elements. The interfaces described with respect to LTE network 110 also may be referred to as sessions. The LTE network 110 includes an Evolved Packet System/Solution (EPS). In one embodiment, the EPS includes EPS nodes (e.g., eNodeBs 111, SGWs 112, PGW 113, MME 114, and PCRF 115) and EPS-related interconnectivity (e.g., the S* interfaces, the G* interfaces, and the like). The EPS-related interfaces may be referred to herein as EPS-related paths.

The IP networks 130 include one or more packet data networks via which UEs 102 may access content, services, and the like.

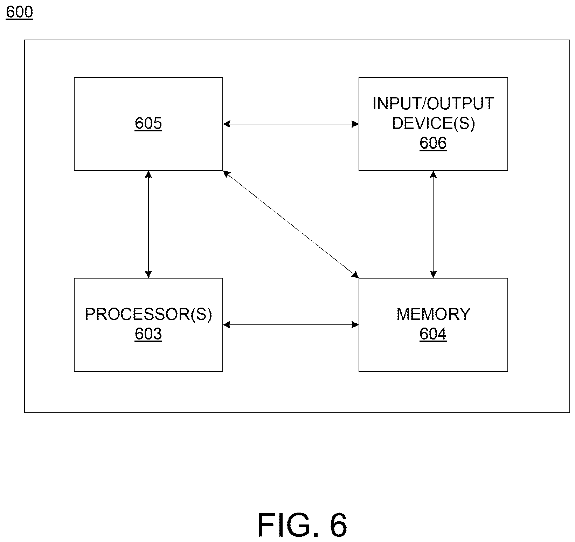

The MS 140 provides management functions for managing the LTE network 110. The MS 140 may communicate with LTE network 110 in any suitable manner. In one embodiment, for example, MS 140 may communicate with LTE network 110 via a communication path 141 which does not traverse IP networks 130. In one embodiment, for example, MS 140 may communicate with LTE network 110 via a communication path 142 which is supported by IP networks 130. The communication paths 141 and 142 may be implemented using any suitable communications capabilities. The MS 140 may be implemented as a general purpose computing device or specific purpose computing device, such as described below with respect to FIG. 6.

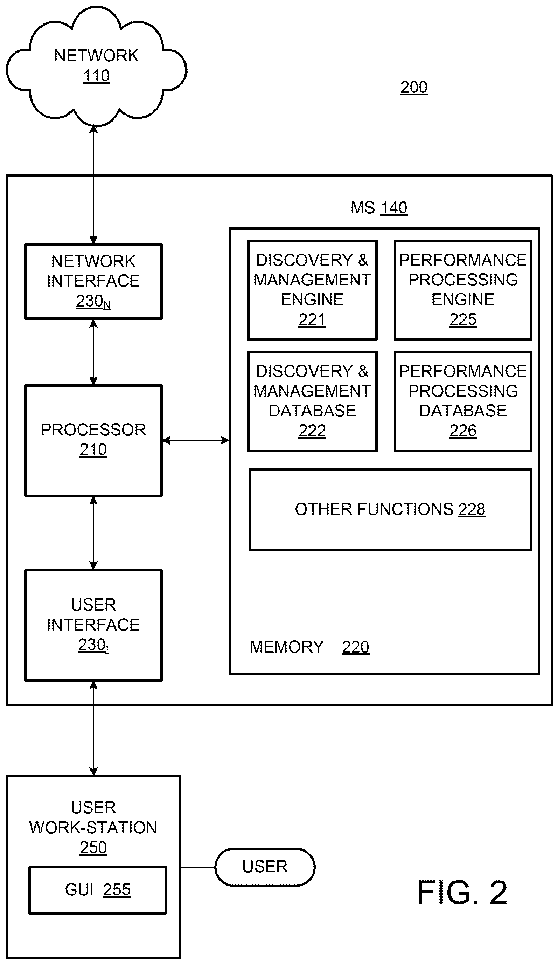

FIG. 2 depicts an exemplary management system suitable for use as the management system of FIG. 1. As depicted in FIG. 2, MS 140 includes one or more processor(s) 210, a memory 220, a network interface 230N, and a user interface 230I. The processor(s) 210 is coupled to each of the memory 220, the network interface 230N, and the user interface 230I.

The processor(s) 210 is adapted to cooperate with the memory 220, the network interface 230N and the user interface 230I to provide various management functions for LTE network 110.

The memory 220, generally speaking, stores programs, data, tools and the like that are adapted for use by the processor(s) 210 and other modules to provide the various functions described herein. The memory includes a Discovery and Management Engine (DME) 221, a Discovery and Management Database (DMD) 222, a Performance Processing Engine (PPE) 225, a Performance Processing Database (PPD) 224 and various other functions 228.

The DMD 222 and PPD 226 store data which may be generated by and used by various ones and/or combinations of the engines, functions and tools of memory 220. The DMD 222 and PPD 226 may be combined into a single database or implemented as respective databases, memory structures and/or portions thereof. Either of the combined or respective databases may be implemented as single databases or multiple databases in any of the arrangements known to those skilled in the art.

Although depicted and described with respect to an embodiment in which each of the engines and databases are stored within memory 120, it will be appreciated by those skilled in the art that the engines and databases may be stored in one or more other storage devices internal to MS 140 and/or external to MS 140. The engines and databases may be distributed across any suitable numbers and/or types of storage devices internal and/or external to MS 140. The memory 220, including each of the engines and/or databases of memory 220, is described in additional detail herein below.

The network interface 230N is adapted to facilitate communications with LTE network 110. The user interface 230I is adapted to facilitate communications with one or more user workstations, illustratively user workstation 250 including graphical user interface (GUI) 255, for enabling one or more users to perform management functions for LTE network 110, such as at a network operations center (NOC) or at a remote location.

### Discovery and Management Engine

The discovery and management engine (DME) 221 is generally adapted for providing network discovery functions and management functions associated with the LTE network 110. Generally speaking, the DME performs a discovery process in which configuration information, status/operating information and connection information regarding the elements and sub-elements forming the network is gathered, retrieved, inferred and/or generated, as well as a management process in which the various nodes, links and so on forming the network 110 are managed in accordance with the business requirements of the network operator and customers. Data used within the context of the discovery and management functions is stored in, illustratively, discovery and management database 222.

### Performance Processing Engine

The performance processing engine (PPE) 225 is generally adapted for providing performance management functions in accordance with the various embodiments. For example, the PPE 225 may be adapted to identify the root causes of performance deficiencies using various types of data received by the discovery and management engine 221 (possibly stored in the discovery and management database 222). For example, in various embodiments, network event counters, alarms, warnings, status updates and the like are aggregated and utilized by the discovery and management engine 221. In various embodiments, the PPE 225 interacts with the DME 221 to process some or all of this data with a view toward identifying root causes of performance deficiencies in the network 110.

The PPE 225 may operate in response to a request from the DME 221 or in an independent or semiautonomous manner. In various embodiments, the DME 221 identifies one or more root causes associated with a specific performance deficiency. In various embodiments, DME 221 identifies one or more root causes associated with multiple performance deficiencies. In various embodiments, root causes associated with one or more performance deficiencies are prioritized in terms of network impact such that a network operator may correct the root causes in a prioritized or ordered manner.

### Correlating TCP Performance with Cell Level Event counters

Various embodiments operate to correlate cell level Transmission Control Protocol (TCP) performance data in terms of loss, throughput, delay and the like with cell level event counters. The large problem space associated with numerous cell level event counters is reduced by selectively filtering out less relevant event counters, clustering similar relevant event counters and selecting one or a few event counters per cluster for further processing using classification analysis and/or other techniques to identify root causes of performance deficiencies in the network.

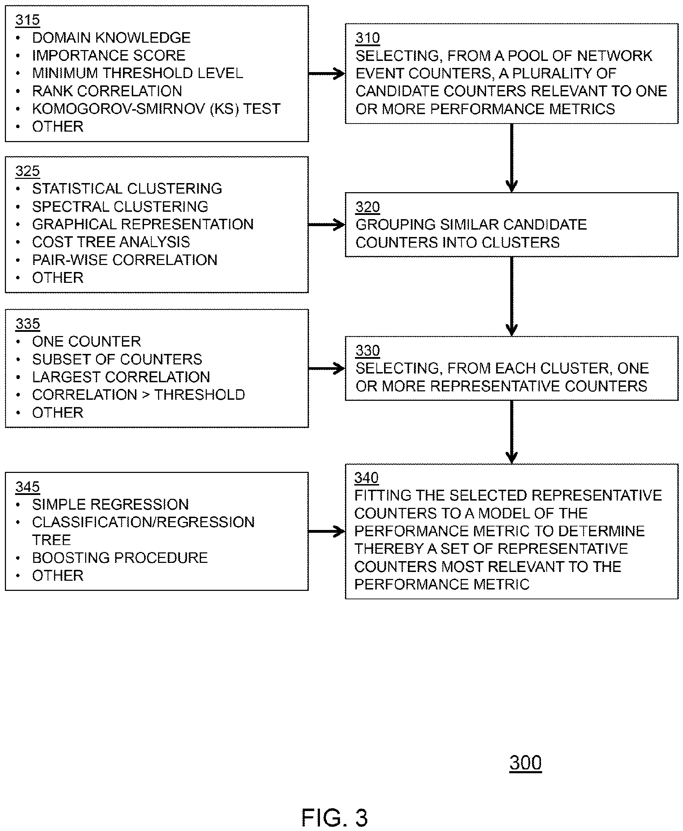

FIG. 3 depicts a flow diagram of a method according to one embodiment. Specifically, FIG. 3 depicts a method 300 for identifying causes of performance deficiencies in the network.

At step 310, a plurality of candidate counters relevant to one or more performance metrics is selected from a pool of network event counters. Referring to box 315, the candidate counters may be selected using one or more of domain knowledge, importance score, minimum threshold level, rank correlation, Komogorov-Smirnov (KS) test or other mechanism, such as discussed in more detail below.

Generally speaking, step 310 operates to reduce the number of event counters to be processed by filtering out those that are less relevant to the performance metric of interest. In this manner, the use of processing, memory and other resources to process irrelevant or less relevant event counters is avoided. Optionally, candidate counters are normalized or otherwise transformed prior to processing to simplify that processing.

At step 320, similar candidate counters are grouped into clusters of counters, such as for each of one or more performance metrics of interest. Referring to box 325, similarity between counters may be identified using a number of techniques, including spectral clustering, cost tree analysis, pair-wise correlation of candidate counters and other techniques. For example, candidate counters exhibiting mutual correlations to a performance metric above a first threshold level (e.g., 0.95) may be considered to be similar. Generally speaking, grouping is performed using statistical clustering techniques such as clustering based on a graphical representation of candidate counters (e.g., spectral clustering, connected components), hierarchical clustering, using pair-wise correlation of candidate counters as similarity score, cost tree analysis and the like.

At step 330, one or more representative counters is selected from each cluster. Referring to box 335, one or more representative counters may be selected according to a largest correlation to a performance metric of interest, correlation above a second threshold level or some other selection criteria.

Generally speaking, steps 320-330 operate to further reduce the number of event counters to be processed by identifying groups of similar counters and selecting one or a few counters from each group, thereby avoiding the further processing of duplicate similar counters.

At step 340, the selected representative counters are fitted to one or more models of one or more performance metrics to determine thereby representative counters most relevant to the one or more performance metrics. In this manner, event counters indicative of fault conditions that are most relevant to performance metrics may be used as a proxy for such performance metrics or in conjunction with the management of such performance metrics by the network management system 140 or other entity associated with the network. In various embodiments, cell level TCP performance data such as loss, throughput, delay or other performance metrics is correlated with various cell level event counters in an efficient manner to improve the ability of network operators to quickly and efficiently address root causes of network problems.

### Selection of Candidate Counters

For example, assume that a network operator concerned with one or more network performance metrics Y (e.g., packet loss, packet delay, throughput and the like) receives performance data associated with a plurality of UTRAN counters x. In various embodiments a computation is made of a score between each counter x and each performance metric Y that shows how important a particular counter x is to a particular performance metric Y. If the score is above a predefined correlation threshold level or meets other selection criteria, then the particular counter is selected for further analysis or processing with respect to at least the particular performance metric Y. A general goal of this step is to reduce the number of counters subjected to further processing. As such, the specific methods used to correlate counters X and performance metrics Y may be relatively loose or generous in terms of allowing candidate counters to avoid removal or filtering at this time.

In one embodiment, a method for measuring the impact or importance of each event counter x with respect to each performance metric Y uses rank correlation such as a Pearson correlation between the ranks of event counter (s) x and performance metric(s) Y. Rank correlation advantageously adapts for possible non-linearity in the dependence between x and Y

In another embodiment, a method for measuring the impact or importance of each event counter x with respect to each performance metric Y uses a Komogorov-Smirnov (KS) test. For example, for a performance metric Y, the computation is made to determine its upper and lower quartile. If the observed value of Y is above the upper quartile, then it may be presumed to have a high value. Similarly, if the observed value of Y is below the lower quartile, then it may be presumed to have a low value. In one embodiment, a KS difference is then found between two cumulative probability conditional distributional curves P(X | *high y values*) and P(X | *low y values*). If x has little or no has no impact on Y, then these two conditional distribution should not differ much; if x has significant impact on Y, then these two conditional distribution should differ significantly.

The KS test is especially useful within the context of classification trees as will be discussed in more detail below. Specifically, the KS test operates to eliminate the data points where the values of a performance metric Y are reasonable in range while focusing attention on the differentiating counters for the high and low values of the performance metric Y (e.g. loss).

### Grouping of Similar Candidate Counters

There are many groups of, illustratively, UTRAN counters that may be used to represented histograms of various performance metrics, such as the following: VS.IrmcacDistributionRscp.N[val1]LeMeasLtN[val2], where [val1,val2] are used to represent non-overlapping data ranges. Event counters in such counter groups are related since they represent different parts of the histogram of the distribution.

As an example, let X be a metric with its histogram being represented by a vector counter group [*x₁, x₂...xₘ*] where *xᵢ* represents the frequency counts in interval *lᵢ* = [*bᵢ₋₁*, *bᵢ*], *b₀* ≤ *b₁* ≤ *... bₖ* ≤ *bₖ₊₁* ... ≤ *bₘ*, and [*b₀, bₘ*] is the effective range of the counter. These two methods may be used within the context of the various embodiments in a manner similar to that described above to correlate counters x with one or more performance metrics Y.

One embodiment (rank correlation) contemplates correlating P(X <= *bᵢ*) and Y, then finding the index *i* that maximize the correlation such that P(X <= *bᵢ*) is a representative metric from the counter group selected for further analysis. Additional representative metrics may also be selected in various embodiments, such as one or more of the next index i values that maximize the correlation.

One embodiment (using a KS score) contemplates finding a distribution of X using the set of counters for high/low values of Y, and then running a KS test for finding the difference between conditional distribution function (CDF) distributional curves, illustratively normalized for high loss, and low loss respectively. The KS score is computed as the maximum difference between the two CDF curves. The location bi where the difference is the greatest is calculated as its corresponding P(X <= *bᵢ*) is used. In addition, the total frequency counts may also be computed for further analysis. As a result, only two counters remain for further correlation analysis.

Various methodologies may be employed to eliminate highly similar or duplicated event counters for further correlation analysis with respect to one or more performance metrics Y. A spectral grouping may be performed to form clusters of these highly correlated counters by computing a correlation for every pair of counters and forming an edge between the pair if the absolute value of the correlation exceeds a threshold such as, illustratively, 0.95 (higher or lower thresholds may be selected).

### Selection of Cluster Representative Counters

For each cluster, one or more counters having the largest correlation with Y are selected to be representative of the cluster or counter group. That is, the various embodiments group similar event counters with respect to one or more performance metrics, and then select one counter, or relatively small number of counters, as representative of each counter group.

### Model Flitting and Analysis

The representative counters of the various clusters or groups are then processed according to a model. In various embodiments the model may comprise a regression, classification trees, regressions trees and so on depending upon the performance metric Y of interest. After fitting the representative data to the model, an analysis is performed to identify the event counters most closely associated with root causes of performance metric problems.

### Classification/Regression Trees

As an example, assume that a performance metric of interest Y comprises a packet loss rate and that a network operator wishes to identify those event counters most related to packet loss rate. It is noted that loss rate (e.g., losses per time interval such as every 15 minutes) correlation modeling is preferred over individual loss modeling due to the discrete nature of individual loss events.

In various embodiments, classification trees and various modifications thereof are used to predict membership of event counters x in one or more classes of categorical dependent variable(s) representing performance metric(s) of interest Y. Various other statistical processing functions may also be employed within the context of the embodiments, such as of Discriminant Analysis, Cluster Analysis, Nonparametric Statistics, Nonlinear Estimation and so on.

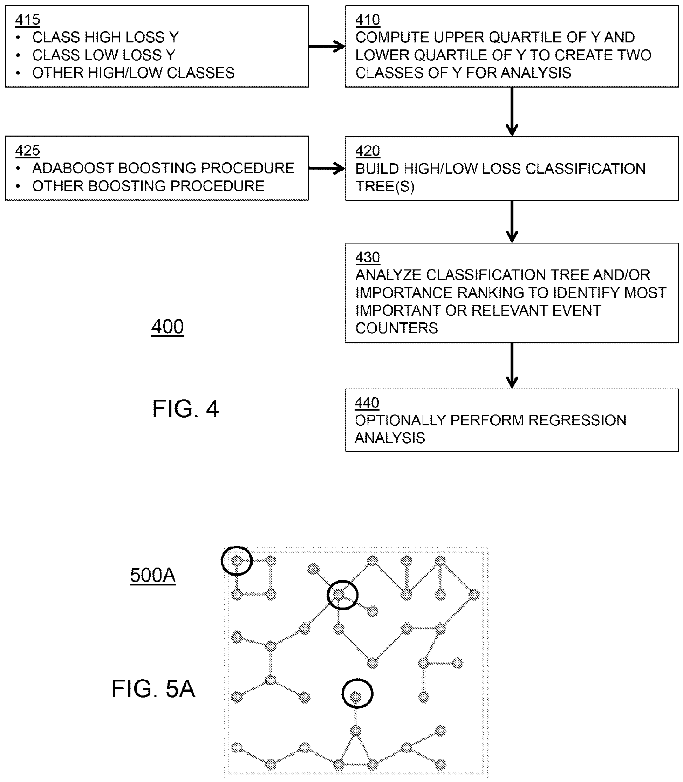

FIG. 4 depicts a flow diagram of a method according to one embodiment. Specifically, the method 400 of FIG. 4 provides an exemplary classification method suitable for use by the PPE 225 as discussed above with respect to FIG. 1, and step 340 as discussed above with respect to FIG. 3. It is noted that the method 400 of FIG. 4 contemplates processing a single performance metric of interest Y using a plurality of representative event counters x, such as those representative event counters selected in accordance with the method 300 of FIG. 3. However, the method may be performed repeatedly for each of multiple performance metrics of interest Y₁ through Y_{N}.

At step 410, an upper quartile of Y is computed and a lower quartile of Y is computed, to create two classes of Y, for which classification analysis is performed using selected event counter(s) x. Referring to box 415, observations associated with the computed upper quartile of Y are treated as a high loss class, while observations associated with the computed lower quartile of Y are treated as a low loss class. Other high/low classes/classifications may be utilized.

Step 410 is used within the context of the classification analysis embodiment. In the case of a regression tree embodiment, the division into two classes is not necessary since all existing data may be used. In particular, step 410 operates to define splits associated with the data suitable for use within the context of a classification tree. It should be noted that the upper quartile/lower quartile split defined herein may be adapted by those skilled in the art informed by the teachings of the present embodiments. For example, in one embodiment an upper third/lower third split is used. In other embodiments, an upper quintile lower quintile split is used. Other data splits are contemplated by the inventors.

At step 420, a classification tree is built. Referring to box 425, optional boosting procedures may also be used within the context of building a classification tree. Such boosting procedures comprise, illustratively, the known 'AdaBoost' method developed by Freund and Schapire. As a byproduct of the boosting method, for each event counter X, an importance score may be computed with respect to a performance metric Y, which score may be used to arrange or order the event counters x within the context of the classification tree.

At step 430, the classification trees analyzed to identify the most important or relevant event counters x with respect to a performance metric Y.

At step 440, an optional regression analysis may be performed.

Generally speaking, for classification analysis the various embodiments balance the probabilities of two cases by sampling the event counter data, splitting the data into two equal groups (e.g., training and testing) and then building a classification tree/decision tree.

### Example

A sample set of event counter data associated with a number of cells in a wireless network used by the inventors and processed according to the embodiments is described herein.

FIG. 5A graphically depicts an exemplary spectral clustering of candidate counters suitable for selecting representative counters. Specifically, FIG. 5A depicts, illustratively, three groups of interconnected candidate nodes. Each candidate node (solid circle) comprises one or many candidate event counters (possibly hundreds of event counters) relevant to a performance metric. Each of the candidate nodes in a group exhibits mutual correlation to a performance metric Y larger than a predefined threshold level, such as 0.85, 0.90, 0.95 and the like. One candidate node per group, identified by a circle around it, is selected as a representative node for that group. The selected representative nodes provide a high correlation with the performance metric and are subjected to further processing according to the various embodiments.

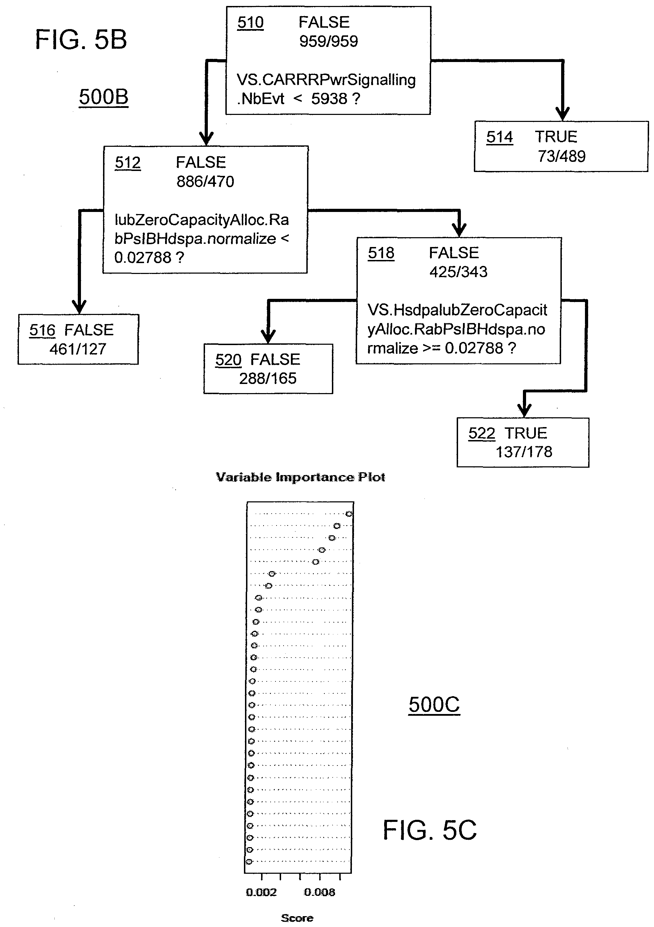

FIG. 5B graphically depicts a high/low loss classification tree based upon a sample set of event counter data. Specifically, FIG 5B depicts a classification tree in which a sequence of high/low data splits are evaluated against various event counters to provide true/false results and, thereby, build a classification tree. The specific event counters and data splits shown in FIG. 5B and described below are merely exemplary in nature. Those skilled in the art and informed by the teachings of the present embodiments will be able to construct classification trees based upon these and/or other event counters.

A leaf 510 data split (e.g., 959/959) is evaluated by a counter VS.CARRRPwrSignalling.NbEvt < 5938 to provide if true a leaf 512 and to provide if false a leaf 514.

The leaf 512 data split (e.g., 886/470) is evaluated by a counter lubZeroCapacityAlloc.RabPsIBHdspa.normalize < 0.02788 to provide, if false, a leaf 516, and against a counter VS.HsdpalubZeroCapacityAlloc.RabPsIBHdspa.normalize >= 0.02788 to provide, if false, a leaf 518.

The leaf 518 data split (e.g., 425/343) is evaluated against a counter VS.IrmcacDistributionRscp.N.ratio < 0.4812 to provide if true a leaf 522 and to provide if false a leaf 520.

FIG. 5C graphically depicts a variable importance plot along with a correspondingly ordered list of event counter data for a specific performance metric. In particular, FIG. 5C graphically depicts a variable importance plot in which an importance score (x-axis) is plotted for each of a plurality of event counters (y-axis). The importance plot of FIG. 5C may be used to visually rank or examine the cluster result of, illustratively, the 30 most important event counters x associated with the performance metric "loss rate" for the sample set of event counter data. A special grouping of the top 30 event counters was performed in which rank correlation between pairs of counters was computed and a threshold of 0.8 used to define a link or statistically significant correlation between counter pairs. While not shown in FIG. 5C, the specific event counters are as follows (in order of importance):
VS.DedicatedDownlinkRetransmittedPdusRIcReferenceCell.DIRabSRB;
VS.IrmcacPowerDist.Rng.total;
VS.CARRPwrSignalling.NbEvt;
VS.DITtIPwrHsdpaNonGbrOnly..total;
VS.NbrCellUpdates.CellReselection;
VS.MeasEvent1JCell;
VS.IrmcacDistributionRscp.N.total;
VS.CommonMacDownlinkPcchSdu;
VS.HsdpalubZeroCapacityAlloc.RabPsIBHsdpa.normalize;
VS.RadioLinkSetupSuccess.PsHsdpaDchUI;
VS.RF.HsAvailPowerRatio.LE.ratio;
VS.EdchFpRetransHarq.NsubfrmNharqEq2;
VS.RF.TxCodePwr.LEplus18;
VS.IrmcacDistributionRscp.N.ratio;
VS.PagingRecordsSentOnPcchCs.TerminatingConversationalCall;
RRC.FailConnEstab.TimeoutRepeat;
VS.RadioLinkFailureIndication.SynchronisationFailure;
VS.DistRssi.DistRssi.ratio;
VS.IrmcacDistributionEcNO.PwrRngN.ratio;
VS.IrmcacPowerDist.Rng.ratio;
VS.AvgTxPower.Avg;
VS.DistDITtlPwrRatio.PwrRt.ratio;
VS.RadioBearerReconfigurationSuccess.RbCsSpeech;
VS.RF.HsCodes.11;
VS.RF.TxPwr.AlICodes.LE.ratio;
KPI13;
VS.RRC.AttConnEstab.LastperProc.Registration;
VS.RadiobearerReconfigurationSuccess.RbPsHsdpaDIEdchUI;
VS.RF.TxCodePwr.LEplus36; and
VS.MAC.NumPdu.HS.Retrans.

Referring to FIG. 5C, the most important as well as largest group of event counters comprises counters that measure transmission power, handoff events, and radio link setup events. The combination of all these counters contribute to high loss rate. This combination indicate most UEs are at the cell edge or poor coverage area. The second most important group of event counters comprises counters that measure paging activities. Poor coverage area or high mobility can result in repeated paging events, which in turn causes high loss. The third most important group of event counters comprises counters that measure cell congestion, channel quality, transmission code power. This group suggests that a moderate high load results in low transmission code power for each UE; this in turn causes high loss due to relatively poor channel quality.

By performing optional linear regression analysis on the various event counters and their impact on one or more performance metrics, additional characterizing data associated with the wireless network may be provided. In the case of the sample set of event counter data, 70% of the variance in the performance metric denoted as Nack.Rate is explained by the event counters identified as important to this performance metric. Thus, the various methodologies employed herein provide useful correlation of event counters to performance metrics of interest.

Based upon the classification tree and importance plot depicted in FIG. 5, observations may be made with respect to performance of the wireless network from which the sample set of event counter data was retrieved. While these observations are based upon the specific operating conditions associated with the cells in the corresponding sample wireless network, results and procedures used in obtaining these results are instructive. Five of many possible observations/analysis are presented as follows:
First, high handoff events cause high losses. An event counter denoted as VS.CARRPwrSignalling.NbEvt measures the number of link addition and deletion events. When it is larger than a threshold of 5938 events during a 15min interval, 489 out of all high loss intervals (959) exhibited high loss, while only 73 out of 959 low loss intervals crossed this threshold. This event counter is fifth from the top of the variable importance plot of FIG. 5C.
Second, low cell congestion typically means low loss. An event counter denoted as VS.HsdpalubZeroCapacityAlloc.RabPsIBHsdpa.normalize measures cell congestion. Half of the low loss intervals exhibit a value of this counter below 0.02788. By contrast, only 10% of the high loss intervals exhibit a value below this threshold. This event counter is ninth from the top of the variable importance plot of FIG. 5C.
Third, with moderate cell congestion, low paging activities mean low loss.
Fourth, high paging activity together with low radio link setup success causes high loss. This may be due to user equipment (UE) losing network conductivity and low coverage areas, which results in increased UE paging activity by the MME.
Fifth, high cell congestion leads to a high loss.

The various techniques and methods discussed herein may be used to provide cell by cell error analysis, cell grouping error analysis and so on. Moreover, using AdaBoost trees and other boost techniques, improved stability and accuracy may be achieved within the context of the various embodiments.

FIG. 6 depicts a high-level block diagram of a computer suitable for use in performing functions described herein.

As depicted in FIG. 6, computer 600 includes a processor element 603 (e.g., a central processing unit (CPU) and/or other suitable processor(s)), a memory 604 (e.g., random access memory (RAM), read only memory (ROM), and the like), a cooperating module/process 605, and various input/output devices 606 (e.g., a user input device (such as a keyboard, a keypad, a mouse, and the like), a user output device (such as a display, a speaker, and the like), an input port, an output port, a receiver, a transmitter, and storage devices (e.g., a tape drive, a floppy drive, a hard disk drive, a compact disk drive, and the like)).

It will be appreciated that the functions depicted and described herein may be implemented in software and/or in a combination of software and hardware, e.g., using a general purpose computer, one or more application specific integrated circuits (ASIC), and/or any other hardware equivalents. In one embodiment, the cooperating process 605 can be loaded into memory 604 and executed by processor 603 to implement the functions as discussed herein. Thus, cooperating process 605 (including associated data structures) can be stored on a computer readable storage medium, e.g., RAM memory, magnetic or optical drive or diskette, and the like.

It will be appreciated that computer 600 depicted in FIG. 6 provides a general architecture and functionality suitable for implementing functional elements described herein or portions of the functional elements described herein.

It is contemplated that some of the steps discussed herein as software methods may be implemented within hardware, for example, as circuitry that cooperates with the processor to perform various method steps. Portions of the functions/elements described herein may be implemented as a computer program product wherein computer instructions, when processed by a computer, adapt the operation of the computer such that the methods and/or techniques described herein are invoked or otherwise provided. Instructions for invoking the inventive methods may be stored in tangible and non-transitory computer readable medium such as fixed or removable media or memory, transmitted via a tangible or intangible data stream in a broadcast or other signal bearing medium, and/or stored within a memory within a computing device operating according to the instructions.

While the foregoing is directed to various embodiments of the present invention, other and further embodiments of the invention may be devised without departing from the basic scope thereof. As such, the appropriate scope of the invention is to be determined according to the claims, which follow.

## Claims

1. A method for identifying causes of performance metric changes in a communication network, the method comprising:
selecting (310), from a pool of network event counters, a plurality of candidate counters relevant to a performance metric;
grouping (320) the candidate counters into clusters of similar counters;
selecting (330), from each cluster, one or more representative counters; and
fitting (340) the selected representative counters to a model of the performance metric by processing the selected representative counters according to said model and determining a set of representative counters most relevant to the performance metric based on the fitted selected representative counters.

2. The method of claim 1, wherein selecting the plurality of candidate counters comprises:
determining for each event counter a respective importance score for the performance metric; and
selecting as candidate counters for the performance metric those event counters having a respective importance score above a threshold level.

3. The method of claim 2, wherein said importance score is determined according to a rank correlation or a Kolmogorov-Smirnov ,KS, test.

4. The method of claim 1, wherein said one or more representative counters comprise a predefined number of candidate counters having the largest correlation to the performance metric.

5. The method of claim 1, wherein said fitting uses one or more of a regression analysis, a classification tree, a classification/regression tree and a classification/regression tree adapted in accordance with a boosting procedure.

6. The method of claim 1, wherein said method is repeated for each of a plurality of performance metrics.

7. The method of claim 1, wherein said grouping is performed using one or more of a clustering technique, a hierarchical clustering technique and a cost tree analysis technique.

8. An apparatus for use in a network management system and for identifying causes of performance metric changes in a communication network, the apparatus comprising:
a processor (603) configured to:
select (310) from a pool of network event counters, a plurality of candidate counters relevant to a performance metric;
group (320) the candidate counters into clusters of similar counters;
select (330) from each cluster, one or more representative counters; and
fit (340) the selected representative counters to a model of the performance metric by processing the selected representative counters according to said model and determine a set of representative counters most relevant to the performance metric based on the fitted selected representative counters.

9. A tangible and non-transitory computer readable medium including software instructions which, when executed by a processor, adapt the processor to perform a method for identifying causes of performance metric changes in a communication network, the method comprising:
selecting (310), from a pool of network event counters, a plurality of candidate counters relevant to a performance metric;
grouping (320) the candidate counters into clusters of similar counters;
selecting (330), from each cluster, one or more representative counters; and
fitting (340) the selected representative counters to a model of the performance metric by processing the selected representative counters according to said model and determining a set of representative counters most relevant to the performance metric based on the fitted selected representative counters.

10. A computer program product comprising computer instructions which, when executed by a processor in a computer, adapt the processor to perform a method for identifying causes of performance metric changes in a communication network, the method comprising:
selecting (310), from a pool of network event counters, a plurality of candidate counters relevant to a performance metric;
grouping (320) the candidate counters into clusters of similar counters;
selecting (330), from each cluster, one or more representative counters; and
fitting (340) the selected representative counters to a model of the performance metric by processing the selected representative counters according to said model and determining a set of representative counters most relevant to the performance metric based on the fitted selected representative counters.

## Patentansprüche

1. Verfahren zum Identifizieren der Ursachen von Leistungsmetrik-veränderungen in einem Kommunikationsnetzwerk, wobei das Verfahren umfasst:
Auswählen (310), aus einem Pool von Netzwerkereigniszählern, einer Vielzahl von in Frage kommenden Zählern, die relevant für eine Leistungsmetrik sind;
Gruppieren (320) der in Frage kommenden Zähler in Cluster von ähnlichen Zählern;
Auswählen (330), aus jedem Cluster, eines oder mehrerer repräsentativer Zähler; und
Anpassen (340) der ausgewählten repräsentativen Zähler an ein Modell der Leistungsmetrik durch Verarbeiten der ausgewählten repräsentativen Zähler gemäß besagtem Modell und Bestimmen eines Satzes von repräsentativen Zählern, die am relevantesten für die Leistungsmetrik sind, beruhend auf den angepassten, ausgewählten repräsentativen Zählern.

2. Verfahren nach Anspruch 1, wobei das Auswählen der Vielzahl von In Frage kommenden Zählern umfasst:
Bestimmen von einem jeweiligen Bedeutungsfaktor für die Leistungsmetrik für jeden Ereigniszähler; und
Auswählen von für die Leistungsmetrik in Frage kommenden Zählern aus den Ereigniszählern mit einem jeweiligen Bedeutungsfaktor über einem Grenzwertpegel.

3. Verfahren nach Anspruch 2, wobei besagter Bedeutungsfaktor bestimmt wird gemäß einem Korrelationsrang oder einem Kolmogorov-Smirnov, KS, -Test.

4. Verfahren nach Anspruch 1, wobei besagter einer oder besagte mehrere repräsentative Zähler eine vorbestimmte Anzahl von in Frage kommenden Zählern mit der größten Correlation zur Leistungsmetrik umfassen.

5. Verfahren nach Anspruch 1; wobei besagtes Anpassen eine oder mehrere Regressionsanalysen, einen Klassifikationsbaum, einen Klassifikations-/Regressionsbaum und einen Klassifikations-/Regressionsbaum angepasst gemäß eines Steigerungsverfahrens verwendet.

6. Verfahren nach Anspruch 1, wobei besagtes Verfahren für jede einer Vielzahl von Leistungsmetriken wiederholt wird.

7. Verfahren nach Anspruch 1, wobei besagtes Gruppieren unter Verwendung von einer oder mehreren Clustertechniken, einer hierarchischen Clustertechnik und einer Kostenbaum-Analysetechnik durchgeführt wird.

8. Vorrichtung zur Verwendung in einem Netzwerkverwaltungssystem und zum Identifizieren der Ursachen von Leistungsmetrikveränderungen in einem Kommunikationsnetzwerk, wobei die Vorrichtung
umfasst;
einen Prozessor (603), konfiguriert zum:
Auswählen (310), aus einem Pool von Netzwerkereigniszählern, einer Vielzahl von in Frage kommenden Zählern, die relevant für eine Leistungsmetrik sind;
Gruppieren (320) der in Frage kommenden Zähler In Cluster von ähnlichen Zählern;
Auswählen (330), aus jedem Cluster, eines oder mehrerer repräsentativer Zähler; und
Anpassen (340) der ausgewählten repräsentativen Zähler an ein Modell der Leistungsmetrik durch Verarbeiten der ausgewählten repräsentativen Zähler gemäß besagtem Modell und Bestimmen eines Satzes von repräsentativen Zählern, die am relevantesten für die Leistungsmetrik sind, beruhend auf den angepassten, ausgewählten repräsentativen Zählern.

9. Greifbares und nicht transitorisches computerlesbares Medium mit Softwareanweisungen, welche, wenn sie von einem Prozessor ausgeführt werden, den Prozessor anpassen zum Durchführen eines Verfahrens zum Identifizieren der Ursachen von Leistungsmetrikveränderungen in einem Kommunikationsnetzwerk, wobei das Verfahren umfasst:
Auswählen (310), aus einem Pool von Netzwerkereigniszählern, einer Vielzahl von in Frage kommenden Zählern, die relevant für eine Leistungsmetrik sind;
Gruppieren (320) der
in Frage kommenden Zähler in Cluster von ähnlichen Zählern;
Auswählen (330), aus jedem Cluster, eines oder mehrerer repräsentativer Zähler; und
Anpassen (340) der ausgewählten repräsentativen Zähler an ein Modell der Leistungsmetrik durch Verarbeiten der ausgewählten repräsentativen Zähler gemäß besagtem Modell und Bestimmen eines Satzes von repräsentativen Zählern, die am relevantesten für die Leistungsmetrik sind, beruhend auf den angepassten, ausgewählten repräsentativen Zählern.

10. Computerprogramm-Produkt, umfassend Computeranwelsungen, welche, wenn sie von einem Prozessor in einem Computer ausgeführt werden, den Prozessor anpassen zum Durchführen eines Verfahrens zum Identifizieren der Ursachen von Leistungsmetrikveränderungen in einem Kommunikationsnetzwerk, wobei das Verfahren umfasst:
Auswählen (310), aus einem Pool von Netzwerkereigniszählern, einer Vielzahl von in Frage kommenden Zählern, die relevant für eine Leistungsmetrik sind;
Gruppieren (320) der in Frage kommenden Zähler in Cluster von ähnlichen Zählern;
Auswählen (330), aus jedem Cluster, eines oder mehrerer repräsentativer Zähler; und
Anpassen (340) der ausgewählten repräsentativen Zähler an ein Modell der Leistungsmetrik durch Verarbeiten der ausgewählten repräsentativen Zähler gemäß besagtem Modell und Bestimmen eines Satzes von repräsentativen Zählern, die am relevantesten für die Leistungsmetrik sind, beruhend auf den angepassten, ausgewählten repräsentativen Zählern.

## Revendications

1. Procédé pour identifier des causes de changements de métrique de performance dans un réseau de communication, le procédé comprenant les étapes suivantes :
sélectionner (310), parmi un pool de compteurs d'événements de réseau, une pluralité de compteurs candidats pertinents pour une métrique de performance ;
regrouper (320) les compteurs candidats en grappes de compteurs similaires ;
sélectionner (330), dans chaque grappe, un ou plusieurs compteurs représentatifs ; et
ajuster (340) les compteurs représentatifs sélectionnés à un modèle de la métrique de performance en traitant les compteurs représentatifs sélectionnés en fonction du modèle et en déterminant un ensemble de compteurs représentatifs les plus pertinents pour la métrique de performance sur la base des compteurs représentatifs sélectionnes ajustés.

2. Procédé selon la revendication 1, dans lequel la sélection de la pluralité de compteurs candidats comprend les étapes suivantes :
déterminer pour chaque compteur d'événement un score d'importance respectif pour la métrique de performance ; et
sélectionner comme compteurs candidats pour la métrique de performance ces compteurs d'événements ayant un score d'Importance respectif au-dessus d'un niveau de seuil.

3. Procédé selon la revendication 2, dans lequel ledit score d'importance est déterminé en fonction d'une corrélation de rang ou d'un test de Kolmogorov-Smirnov, KS.

4. Procédé selon la revendication 1, dans lequel lesdits un ou plusieurs compteurs représentatifs comprennent un nombre prédéfini de compteurs candidats ayant la plus grande corrélation avec la métrique de performance.

5. Procédé selon la revendication 1, dans lequel ledit ajustement utilise un ou plusieurs parmi une analyse de régression, un arbre de classification, un arbre de classification/régression et un arbre de classification/régression adapté conformément à une procédure de renforcement.

6. Procédé selon la revendication 1, dans lequel ledit procédé est répété pour chacune d'une pluralité de métriques de performance.

7. Procédé selon la revendication 1, dans lequel ledit regroupement est effectué en utilisant une ou plusieurs parmi une technique de mise en grappe, une technique de mise en grappe hiérarchique et une technique d'analyse d'arbre de coût.

8. Appareil destiné à être utilisé dans un système de gestion de réseau et à identifier des causes de changements de métrique de performance dans un réseau de communication, l'appareil comprenant :
un processeur (603) configuré pour :
sélectionner (310) parmi un pool de compteurs d'événements de réseau, une pluralité de compteurs candidats pertinents pour une métrique de performance ;
regrouper (320) les compteurs candidats en grappes de compteurs similaires ;
sélectionner (330) dans chaque grappe, un ou plusieurs compteurs représentatifs ; et
ajuster (340) les compteurs représentatifs sélectionnés à un modèle de la métrique de performance en traitant les compteurs représentatifs sélectionnés en fonction du modèle et en déterminant un ensemble de compteurs représentatifs les plus pertinents pour la métrique de performance sur la base des compteurs représentatifs sélectionnés ajustés.

9. Support lisible par ordinateur tangible et non transitoire incluant des instructions logicielles qui, lorsqu'elles sont exécutées par un processeur, adaptent le processeur pour effectuer un procédé pour identifier des causes de changements de métrique de performance dans un réseau de communication, le procédé comprenant les étapes suivantes :
sélectionner (310), parmi un pool de compteurs d'événements de réseau, une pluralité de compteurs candidats pertinents pour une métrique de performance ;
regrouper (320) les compteurs candidats en grappes de compteurs similaires ;
sélectionner (330), dans chaque grappe, un ou plusieurs compteurs réprésentatifs ; et
ajuster (340) les compteurs représentatifs sélectionnés à un modèle de la métrique de performance en traitant les compteurs représentatifs sélectionnés en fonction du modèle et en déterminant un ensemble de compteurs représentatifs les plus pertinents pour la métrique de performance sur la base des compteurs représentatifs sélectionnés ajustés.

10. Produit de programme informatique comprenant des instructions logicielles qui, lorsqu'elles sont exécutées par un processeur dans un ordinateur, adaptent le processeur pour effectuer un procédé pour identifier des causes de changements de métrique de performance dans un réseau de communication, le procédé comprenant les étapes suivantes :
sélectionner (310), parmi un pool de compteurs d'événements de réseau, une pluralité de compteurs candidats pertinents pour une métrique de performance ;
regrouper (320) les compteurs candidats en grappes de compteurs similaires ;
sélectionner (330), dans chaque grappe, un ou plusieurs compteurs représentatifs ; et
ajuster (340) les compteurs représentatifs sélectionnés à un modèle de la métrique de performance en traitant les compteurs représentatifs sélectionnés en fonction du modèle et en déterminant un ensemble de compteurs représentatifs les plus pertinents pour la métrique de performance sur la base des compteurs représentatifs sélectionnés ajustés.
